# EUROPÄISCHE PATENTSCHRIFT

(11) **EP 1 924 409 B1**
(45) Veröffentlichungstag und Bekanntmachung des Hinweises auf die Patenterteilung: **29.10.2008**
(21) Anmeldenummer: 06775764.1
(22) Anmeldetag: 28.07.2006
(51) Int. Cl.: B25J 18/00, B25J 9/10

(54) **VORRICHTUNG ZUM SCHWENKEN VON OBJEKTEN**
DEVICE FOR SWIVELING OBJECTS
DISPOSITIF POUR FAIRE PIVOTER DES OBJETS

(30) Priorität: 01.09.2005 DE 102005041462
(43) Veröffentlichungstag der Anmeldung: 28.05.2008
(73) Patentinhaber: Esab Cutting Systems GmbH, 61184 Karben (DE)
(72) Erfinder: REISS, Günther, 61352 Bad Homburg (DE)
(74) Vertreter: Voigt, Wolf-Rüdiger
(86) Internationale Anmeldenummer: PCT/DE2006/001318
(87) Internationale Veröffentlichungsnummer: WO 2007/025495

(56) Entgegenhaltungen:
- EP-A2- 0 291 292
- FR-A1- 2 460 762
- US-A- 4 551 058

## Beschreibung

Die Erfindung betrifft eine Vorrichtung zum Schwenken von Objekten, wobei die Objekte im Wesentlichen Werkzeuge oder auch eine Kamera sein können, mit einem größeren Schwenkbereich, als bei herkömmlichen technischen Lösungen üblich.

Bekanntlich werden Werkzeugschwenkvorrichtungen in vielen Bereichen der Technik verwendet. Verschwenken diese Vorrichtungen die Werkzeugspitze um einen festen Punkt, bleibt bei einer Orientierungsänderung die Werkzeugspitze raumfest, was aus vielerlei Gründen erwünscht sein kann. Typische Anwendungen finden sich in der Robotik als Roboterhandgelenk. Ein Roboterhandgelenk ist eine Einrichtung zur Veränderung der Orientierung des vom Roboter geführten Werkzeuges, z. B. eines Bohrers oder Fräsers. Eine Orientierungsänderung des Werkzeuges erfordert keine Veränderung der räumlichen Position des Handgelenkes. Eine Vergrößerung des Roboterarbeitsraumes, eine Verbesserung der Positioniergenauigkeit und die Möglichkeit einer sehr schnellen Orientierungsänderung sind positive Folgen eines solchen Wirkprinzips.

Dabei darf nicht übersehen werden, dass durch eine größere Anzahl von Gliedern zur Kraftübertragung und Führung eine ausreichende Steifigkeit oft nicht gegeben ist. Derartige Vorrichtungen werden auch häufig durch Schmutz, Staub und evtl. Späne in ihrer Funktion beeinträchtigt. Diese Probleme finden sich auch bei Vorrichtungen, mit denen Säuberungsarbeiten, z. B., unter Verwendung von Düsen durchgeführt werden.

Folgende technische Lösungen, bei denen Objekte um einen festen Punkt geschwenkt werden, können zur Charakterisierung des Standes der Technik genannt werden:
Nach EP 0556499 A2 wird eine Anordnung zur Führung minimal invasiver chirurgischer Instrumente beschrieben. Hierzu ist das chirurgische Instrument um den Einstichpunkt im Körper um zwei, senkrecht aufeinander stehende Achsen zu schwenken. Dies wird in vorliegender Schrift durch die Nacheinander-Anordnung zweier Parallelkurbel-Mechanismen gelöst. Eine Vielzahl von Gliedern, untereinander drehgelenkig verbunden sind, bilden die Verbindung zwischen dem Werkzeug - hier dem chirurgischen Instrument - und dem Gestell. Die mechanische Steifigkeit dieser Anordnung ist wegen der langen Gliederkette zwischen Gestell und Werkzeug naturgemäß gering, darüber hinaus birgt die Vielzahl der Gelenke die Gefahr von Spiel. Die große Zahl von Getriebegliedern erfordert eine sehr präzise Fertigung jedes einzelnen, um das gewünschte Bewegungsverhalten zu erreichten.

FR 2460762 A1 offenbart auch eine Vorrichtung zum Schwenken eines Werkzerges um einen fester Punkt mit einen Parallelkurbel -Mechanismus. Eine ähnliche Lösung beschreibt US 5697939 A. Auch diese verwendet eine Parallelkurbel - als Parallelogramm-Mechanismus bezeichnet - zur Führung und vor allem Fixierung eines chirurgischen Instrumentes. Hier jedoch wird nur ein Parallelkurbel-Mechanismus verwendet und es wird die Schwenkung um die rechtwinklig zur Schwenkachse der Parallelkurbel liegende Achse mit einem gestellnahen Drehgelenk realisiert.

Eine auch in diesem Zusammenhang zu nennende Lösung wird gemäß WO 03 / 086219 A2 angegeben.
Die v.g. Nachteile werden unter Umständen mit den beiden letztgenannten gemindert, sie bestehen jedoch in gleicher Weise weiter.

In US 5201742 A ist eine Einrichtung dargestellt, die zur exakten Orientierung eines minimal invasiven Instrumentes dient, derart, daß die Orientierung um einen festen Punkt durch eine Kreisbogenführung geschieht, in deren Mittelpunkt sich der Instrumentendrehpunkt befindet und auf der das Instrument manuell verschwenkt und bei Erreichen der gewünschten Position fixiert werden kann.

Eine technische Lösung zum Anreißen ist nach DE 3545008 A1 dargelegt. Eine Bogenführung, die einen Viertelkreis umfaßt, ist mit einem Drehgelenk so verbunden, daß die Drehachse und das Zentrum der Drehachse sich kreuzen und ein Werkzeug um diesen Kreuzungspunkt im Bereich einer Halbkugel frei verschwenkt werden kann.
Allen technischen Lösungen mit Bogenführungen sind spezifische Nachteil eigen. Bogenführungselemente sind schwer, kostenaufwendige Präzisionsbauteile und sie beanspruchen ihren kompletten Bewegungsbereich als Kollisionsraum. Der Bewegungsbereich ist naturgemäß begrenzt.

Ein Roboterhandgelenk zur Verschwenkung eines Werkzeuges um einen festen Punkt ist in DE 3211688 A1 angegeben, wozu eine sogenannte Doppel-Parallelführung genutzt wird. Wieder sind vergleichsweise viele Glieder und Gelenke erforderlich. Geringe Steifigkeit, insbesondere senkrecht zur Bewegungsebene der Parallelogrammfürung, ist die Folge. Die große Zahl von Drehgelenken in der Einrichtung erschwert deren spielfreie Beweglichkeit. Der Bewegungsbereich ist durch die sogenannten Totlagen des Mechanismus auf etwa 120° begrenzt.

Eine Weiterentwicklung dieses Prinzips wird in Yang, C.H., Rauchfuss, J.W. : A new Zero-Dimension Robot Wrist: Design and Accessebility Analysis, The International Journal of Robotics Research, Vol. 20, No. 2, Februar 2001, pp. 163 -173 beschrieben. Zwei über-oder ineinander angeordnete Parallelkurbel-Mechanismen beseitigen die Begrenzung des Schwenkbereiches und ermöglichen theoretische eine Schwenkung des Werkzeugs um 360°. Alle anderen Nachteile von Parallelkurbel-Mechanismen bleiben jedoch erhalten.

Somit ist es Aufgabe der Erfindung, eine Vorrichtung zum Verschwenken eines Objektes um eine raumfeste Achse vorzuschlagen, wobei die raumfeste Achse im Sinne einer virtuellen Achse außerhalb des von der Vorrichtung in Anspruch genommenen Raumes liegen soll. Der Antrieb der Vorrichtung soll ausschließlich mit einer (einer einzigen) rotatorischen oder auch wahlweise einer translatorischen Antriebsbewegung erfolgen. Weiterhin ist es die Aufgabe der Erfindung, eine unüblich hohe Steifigkeit der Vorrichtung in Richtung der raumfesten Achse zu erreichen, indem der Weg des Kraftflusses kurz ausgebildet sein soll. Der Schwenkbereich des Objekts soll bis zu 360° betragen, damit das Objekt uneingeschränkt um die virtuelle, raumfeste Achse rotieren kann.

Erfindungsgemäß wird die Aufgabe wie folgt gelöst, wobei hinsichtlich der grundlegenden erfinderischen Gedanken auf den Patentanspruch 1 verwiesen wird.
Die weitere Ausgestaltung der Erfindung ergibt sich aus den Patentansprüchen 2 bis 7.

Zur Darlegung der Erfindung sollen weitere Ausführungen gemacht werden.

An einem Gestell werden unter Verwendung an sich bekannter Kreuzschiebeelemente zwei Koppelglieder geführt, die das zu verschwenkende Objekt tragen. Bedingt durch die Kreuzschiebeelemente, welche sich erstens zwischen dem Gestell und dem ersten Koppelglied, als Tragekoppel bezeichnet und weiterhin zwischen der Tragekoppel und dem zweiten Koppelglied, als Führungskoppel bezeichnet, befinden, werden die Koppelglieder parallel und mit konstantem Abstand von dem Gestell geführt. Die Kreuzschiebeelemente bestehen jeweils aus zwei, bevorzugt rechtwinklig zueinander auf je einer Kreuzplatte angeordneten Linearführungen. Es ist erst einmal festzustellen, dass bedingt durch die zwei Kreuzschiebeelemente die Tragekoppel und die Führungskoppel sich im Vergleich zum Gestell frei zweidimensional bewegen können.

Nun soll die gerichtete Bewegung der Koppelglieder dargelegt werden, die erforderlich ist, damit die Aufgabe gelöst werden kann, nämlich dass sich das Objekt außerhalb der Vorrichtung um eine virtuelle, raumfeste Achse schwenken lässt.
Die Bewegung der Koppelglieder wird vorgegeben durch ein Führungsglied, welches kinematisch gesehen eine Kurbel ist. (Daher wird auch der Begriff "Kurbel" künftig verwendet.) Die Kurbel ist an ihrem einen Ende gestellfest gelagert und wird gestellseitig angetrieben, zum Beispiel durch einen am Gestell angeflanschten Elektromotor.
An ihrem distalen Ende trägt die Kurbel einen Gelenkzapfen, der den einen Teil des antriebsseitigen Tragekoppeldrehgelenks bildet und die Kurbel mit der Tragekoppel drehgelenkig verbindet. Der Gelenkzapfen als Teil des Tragekoppeldrehgelenks führt durch die Tragekoppel hindurch und ist an seinem von der Kurbel abgewandten Ende mit einer Kurbelverlängerung starr verbunden, die an ihrem Ende mit dem antriebsseitigen Führungskoppeldrehgelenk der Führungskoppel verbunden ist. Damit bewegt die Kurbel das antriebsseitige Tragekoppeldrehgelenk und das antriebsseitige Führungskoppeldrehgelenk entlang konzentrischer, jedoch nicht identischer Kreisbahnen.

Jedes Koppelglied besitzt im gleichen Abstand von dem Tragekoppeldrehgelenk und dem Führungskoppeldrehgelenk ein weiteres Drehgelenk, über das die Koppelglieder untereinander mit einem Abtriebsglied verbunden sind. Dieses Abtriebsglied beschreibt durch vorgenannte Anordnung eine Kreisschwenkung um eine virtuelle, raumfeste Achse, die sich als um den Vektor zwischen den beiden Drehgelenken der Koppelglieder verschobene Drehachse zwischen Gestell und Kurbel darstellt.

An diesem Abtriebsglied ist mit einem beliebig ausgebildeten Flansch das zu schwenkende Objekt, beispielsweise ein Werkzeug, derart befestigt, dass die Werkzeugspitze, der sogenannte TCP (Tool Center Point), die virtuelle, raumfeste Achse trifft.
Eine Variante der so eben beschriebenen Vorrichtung ist dadurch gekennzeichnet, dass zwei Führungsglieder, nämlich zwei Kurbeln, verwendet werden.

Eine weitere Lösung einer Haltevorrichtung für Werkzeuge in einer Werkzeugmaschine wird in JP 2004146714 A vorgestellt. Eine von drei rotierenden Wellen der Vorrichtung steht mit einem Basisglied in Verbindung, wobei auch Führungsschienen an letzterem befestigt sind.
Entlang der Schiene bewegbare Halteglieder sind dabei mit den ortsveränderlichen Objekten verbunden. Ferner sind Koppeln mit den jeweilig anderen Wellen verbunden, wobei bewegungsumkehrende Mechanismen zur Umkehr der rotatorischen Bewegung der Koppeln in lineare Bewegungen der zu bewegenden Objekte vorhanden sind. Somit werden die rotatorischen Bewegungen der rotierenden Wellen in lineare Bewegungen der jeweils gehaltenen Glieder umgewandelt.
Schwenkungen von Objekten um raumfeste virtuelle Achsen sind mit dieser Lösung nicht möglich.

Nach DE 20 2004 017 526 U1 ist eine Translations- und Schwenkvorrichtung zum Verfahren und Schwenken von Objekten , insbesondere innerhalb eines Systems zur Verpackung von Teilen bekannt. Diese Vorrichtung kann auch einfache Arbeiten innerhalb der Fertigung von Bauteilen in einer Fließfertigung ausführen.
Die Vorrichtung ermöglicht zwei translatorische Bewegungsabläufe, wobei an einer Trägereinheit, die für sich gesehen verfahren werden kann, ein motorisch definiert angelenkter Kurbelarm angebracht ist. Letzterer kann Objekte über bestimmte Ausbildungen erfassen und eine Ortsveränderung bewirken.
Diese Lösung kann allerdings die Anforderungen der Erfindung nicht erfüllen.

Dementsprechend ist das Gestell so breit ausgeführt, dass eine zweite Kurbel, die genau der vorher beschriebenen Kurbel entspricht und horizontal in gleicher Höhe am Gestell gelagert ist, synchron mit der bereits beschriebenen Kurbel angetrieben wird. Die damit an sich gegebene Überbestimmung wirkt sich auf die Stabilität der Vorrichtung vorteilhaft aus. Die weitere Übertragung der Bewegungen erfolgt sinngemäß wie vorher beschrieben, nur mit dem Unterschied, dass die erforderlichen Bauteile antriebsseitig zweifach ausgeführt sind.

Als alternative erfindungsgemäße Lösung wird vorgeschlagen, dass die Vorrichtung nur aus einem Koppelglied besteht, das in der bereits dargelegten Art über ein Kreuzschiebeelement mit dem Gestell verbunden ist. Mit einem Drehgelenk ist dieses Koppelglied mit einem Hebel verbunden, der seinerseits wieder mit einem Drehgelenk eine Verbindung mit dem Gestell besitzt.
Ein zweites Drehgelenk auf dem Koppelglied dient als Lagerung für das Abtriebsglied, das seinerseits den Flansch für das Werkzeug trägt.
Auf der Achse des zwischen Hebel und Koppelglied liegenden Drehgelenkes ist eine erste zylindrische Scheibe eines Zugmittelgetriebes derart angeordnet, dass die Zylinderachse mit der Drehachse zusammenfällt. In gleicher Weise trägt das Abtriebsglied eine zweite Scheibe, die in ihrem Durchmesser mit der ersten identisch ist. Beide Scheiben werden durch ein Zugmittel, z. B. einen Zahnriemen oder eine Kette, verbunden und garantieren die Parallelführung des Abtriebsgliedes zur Antriebskoppel.

Es sollen noch einige Hinweise erfolgen, welche die weitere Ausgestaltung der Erfindung betreffen:

Das Gestell und die dazu mit konstantem Abstand und parallel zum Gestell geführten Koppelglieder sollen vorzugsweise eben ausgeführt sein.

Die Kreuzschiebeelemente bestehen bevorzugt aus rechtwinklig zueinander angeordneten und mit einer Platte verbundenen Linearführungen.

Der von den Achsen der (gestellseitigen, tragekoppelseitigen, führungskoppelseitigen) ersten bzw. zweiten Linearführung gebildete Winkel sollte möglichst groß (90°) sein.

Es sei darauf verwiesen, dass in vorher beschriebener Weise die zweite Linearführung die Führungskoppel auch mit dem Gestell anstatt mit der Tragekoppel verbinden kann.

Es sei weiter darauf verwiesen, dass zur Steigerung der Steifigkeit und aus anderen konstruktiven Gründen, nicht nur eine Schiene der Linearführung, sondern auch zwei oder mehrere Schienen parallel zueinander angeordnet sein können.

Der Antrieb der Kurbel über Ritzel und Antriebszahnrad erfolgt bevorzugt über einen rotatorischen, zweckmäßigerweise elektrischen Antrieb. Auch ein translatorischer Antrieb wäre denkbar.

Zum Antrieb ist noch anzumerken, dass dieser vorteilhaft an der mit dem Gestell drehbar verbundenen Kurbel rotatorisch erfolgt. Der Antrieb kann aber auch zwischen Gestell und der Kreuzplatte, zwischen Gestell und erstem Koppelglied oder zwischen der Kreuzplatte zwischen Gestell und erstem Koppelglied in Form eines translatorischen Antriebes erfolgen. Vorteilhaft sind all jene Ausführungen, bei denen der Antrieb gestellfest ausgebildet ist.
Die erfindungsgemäßen Vorschläge ermöglichen es, nur solche Maschinenelemente einzusetzen, die sich durch eine komplette Kapselung für den Einsatz in sehr schmutziger Umgebung eignen.
Als besonders vorteilhaft ist die kompakte konstruktive Gestaltung hervorzuheben, die unter Verwendung standardisierter, kostengünstiger Maschinenelemente erfolgt.

Die Erfindung soll nunmehr anhand von drei Ausführungsbeispielen erläutert werden.

Die folgenden Figuren zeigen die Schwenkvorrichtung in Prinzipdarstellung:
- Figur 1:: Perspektivische Ansicht von links
- Figur 2:: Perspektivische Ansicht von rechts
- Figur 3:: Vorderansicht
- Figur 4:: Seitenansicht
- Figur 5:: Perspektivische Ansicht mit zwei Kurbeln, wobei vom das Gestell zu sehen ist
- Figur 6:: Perspektivische Ansicht mit zwei Kurbeln, wobei vom die Führungskoppel zu sehen ist
- Figur 7:: Perspektivische Ansicht von links mit Zugmittelgetriebe
- Figur 8:: Perspektivische Ansicht von rechts mit Zugmittelgetriebe

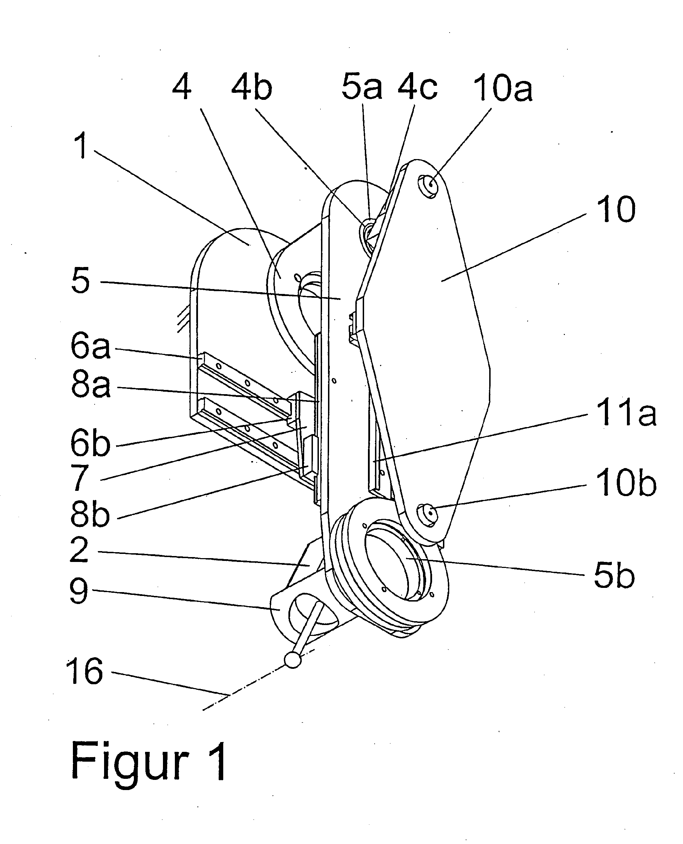

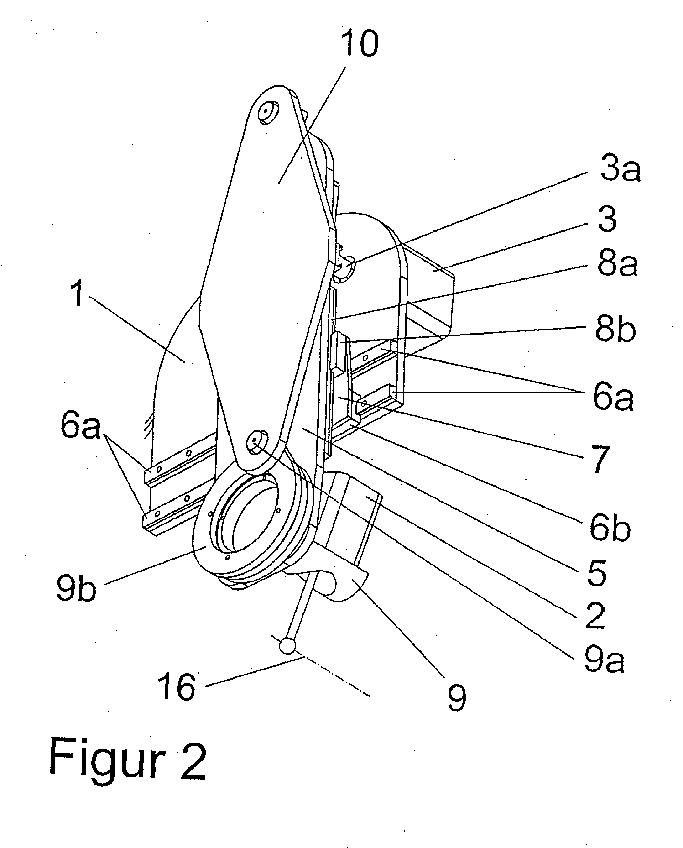

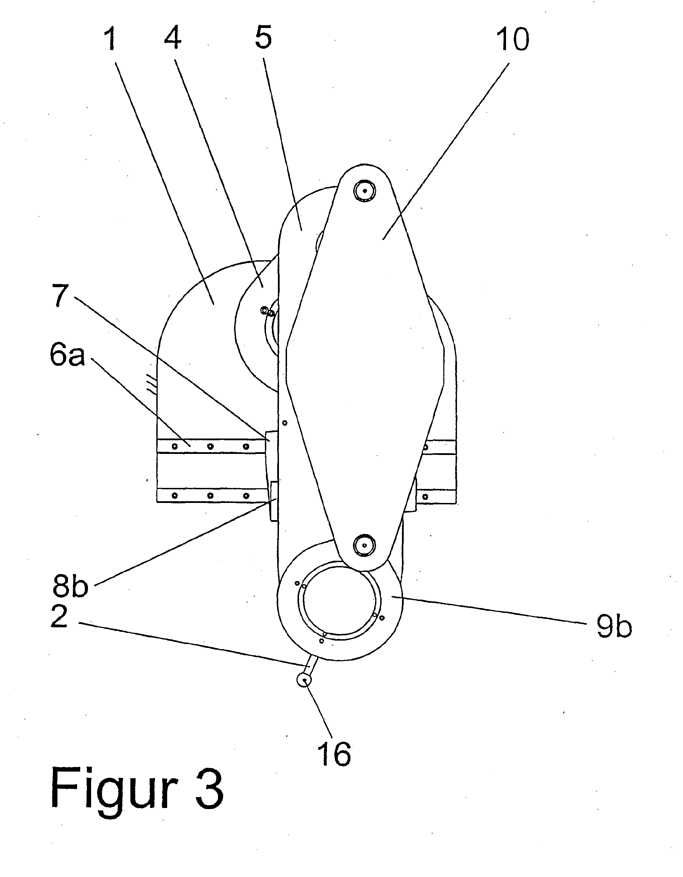

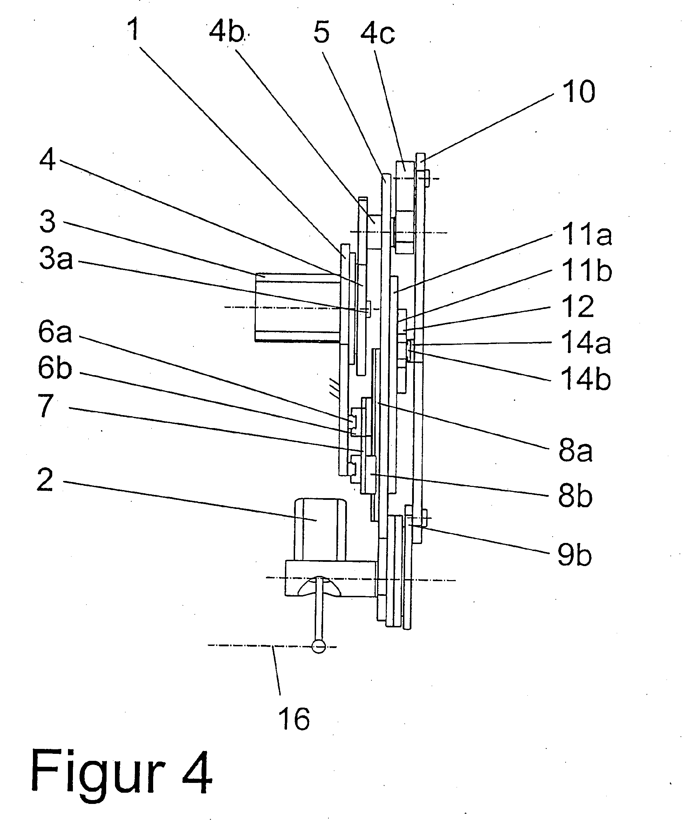

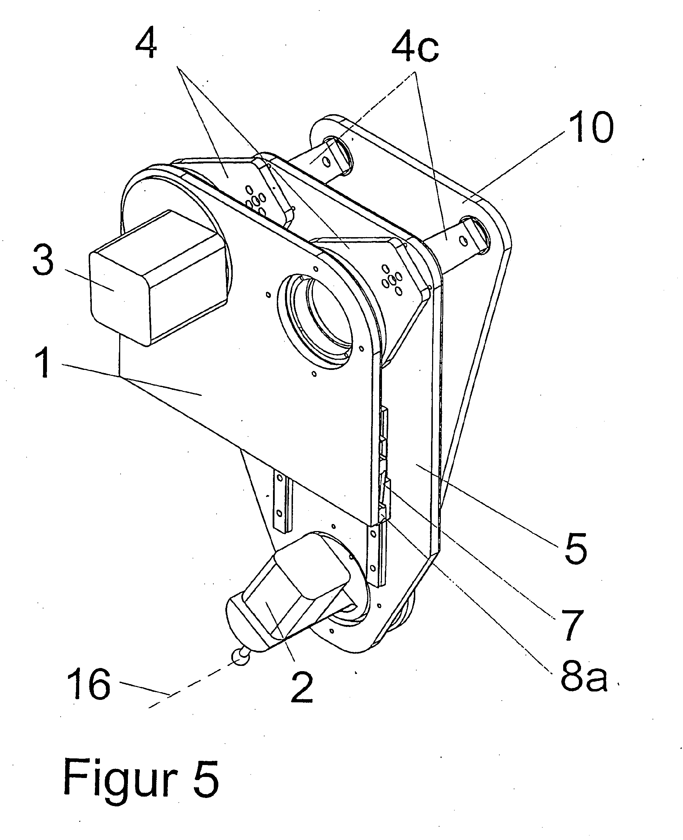

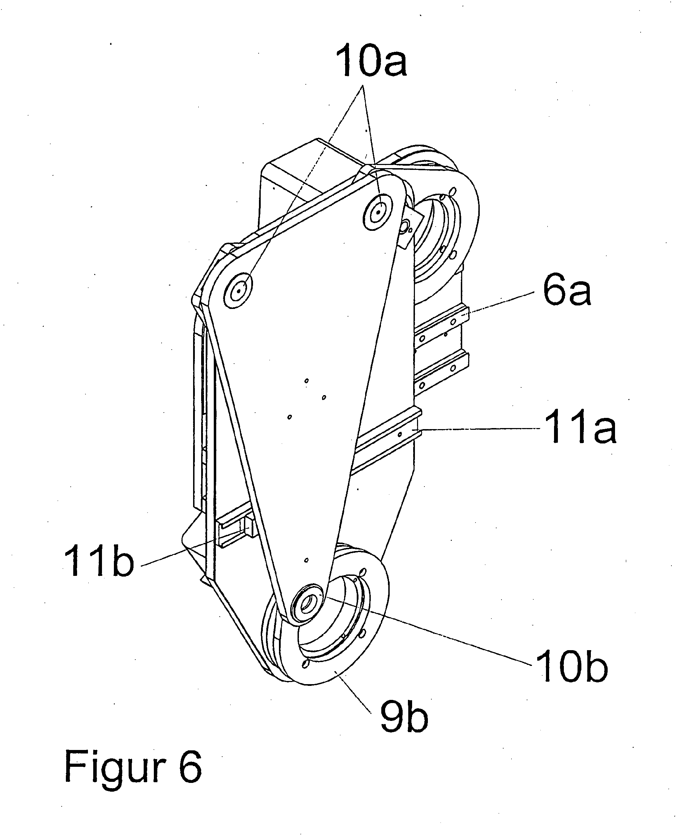

Wie ersichtlich, wurden einige Einzelheiten bei den Figuren 5 und 6 im Vergleich zu den Figuren 1 bis 4 weggelassen, um Wiederholungen zu vermeiden.

Bezüglich der verwendeten Bezugszeichen wird auf die der Patentbeschreibung beigefügte Aufstellung der Bezugszeichen verwiesen.

### 1. Ausführungsbeispiel:

Es wird auf die Figuren 1- 4 verwiesen.

Parallel und mit konstantem Abstand zum Gestell 1 werden zwei Koppelglieder geführt, d. h. die Tragekoppel 5 und die Führungskoppel 10. Der Abstand der Tragekoppel 5 zum Gestell 1 ist geringer als der Abstand der Führungskoppel 10. Zur Führung der Tragekoppel 5 und der Führungskoppel 10 dienen zwei Kreuzschiebeelemente, die aus jeweils zwei, rechtwinklig zueinander angeordneten und mit einer Platte verbundenen Linearführungen bestehen.
Die erste Linearführung 6 b besteht aus den gestellseitigen Schienen 6 a der ersten Linearführung 6 b, die fest mit dem Gestell 1 verbunden sind und den auf diesen linear beweglichen gestellseitigen Wagen der ersten Linearführung 6 b. Die Wagen der ersten Linearführung 6 b sind verbunden mit der ersten Kreuzplatte 7, mit der wiederum auch die tragekoppelseitigen Wagen 8 b der ersten Linearführung 6 b verbunden sind. Die in den tragekoppelseitigen Wagen 8 b der ersten Linearführung 6 b laufenden tragekoppelseitigen Schienen 8 a der ersten Linearführung 6 b sind verbunden mit der Tragekoppel 5.
Die Verbindung der Wagen mit der ersten Kreuzplatte 7 erfolgt gemäß Ausführungsbeispiel so, dass der von den Achsen der gestellseitigen Schienen 6 a der ersten Linearführung 6 b und den tragekoppelseitigen Schienen 8 a der ersten Linearführung 6 b eingeschlossene Winkel 90° beträgt. (Ein Winkel von 0° zwischen den beiden Achsen ist unzulässig.)
In genau identischer Art und Weise sind mit der zweiten Linearführung die Tragekoppel 5 und die Führungskoppel 10 verbunden. Dazu ist die tragekoppelseitige Schiene der zweiten Linearführung 11 a mit der Tragekoppel 5 verbunden. Auf ihr können die tragekoppelseitigen Wagen der zweiten Linearführung 11b sich linear bewegen und sind mit der zweiten Kreuzplatte 12 verbunden. Ebenso mit der zweiten Kreuzplatte 12 verbunden sind die führungskoppelseitigen Wagen der zweiten Linearführung 14b, in denen die Führungskoppelseitige Schiene der zweiten Linearführung 14a linear beweglich ist und fest mit der Führungskoppel 10 verbunden ist.
Wieder beträgt der von den Achsen der tragekoppelseitigen Schiene der zweiten Linearführung 11 a und der führungskoppelseitigen Schiene der zweiten Linearführung 14 a eingeschlossene Winkel 90°.

Die Bewegung der Koppelglieder wird vorgegeben durch die Kurbel 4. Die Kurbel 4 ist an ihrem einen Ende gestellfest gelagert und fest mit einem Antriebszahnrad verbunden. Über einen rotatorischen, bevorzugt elektrischen Antrieb 3 mit einem Antriebsritzel 3a wird das Antriebszahnrad und damit die Kurbel 4 bewegt. An ihrem distalen Ende trägt die Kurbel 4 einen Gelenkzapfen 4 b, der den einen Teil des antriebsseitigen Tragekoppeldrehgelenkes 5a bildet und die Kurbel 4 mit der Tragekoppel 5 drehgelenkig verbindet. Der Gelenkzapfen 4 b führt durch die Tragekoppel 5 hindurch und ist an seinem von der Kurbel 4 abgewandten Ende mit einer Kurbelverlängerung 4 c starr verbunden, die an ihrem Ende mit dem antriebsseitigen Führungskoppeldrehgelenk 10 a der Führungskoppel 10 verbunden ist.
Damit bewegt die Kurbel 4 das antriebsseitige Tragekoppeldrehgelenk 5a und das antriebsseitige Führungskoppeldrehgelenk 10 a entlang konzentrischer, jedoch nicht in identischen Kreisbahnen.
An ihrem kurbelabgewandten Ende trägt die Tragekoppel 5 ein weiteres Drehgelenk, das abtriebsseitige Tragekoppeldrehgelenk 5 b. Gleiches gilt für die Führungskoppel 10, die das abtriebsseitige Führungskoppeldrehgelenk 10 b besitzt. Der Drehgelenkabstand in der Ausdehnungsebene der Führungskoppel 10 und der Tragekoppel 5 muss identisch und größer als der Gelenkabstand an der Kurbelverlängerung 4 c sein.
Mit dem abtriebsseitigen Tragekoppeldrehgelenk 5 b ist die Tragekoppel 5 mit dem Abtriebsglied 9, das mit dem Werkzeughalter identisch ist, drehbar derart verbunden, dass der Werkzeughalter sich auf der dem Gestell 1 zugewandten Seite der Tragekoppel 5 befindet. Ein durch die Tragekoppel 5 hindurch führender Kragzapfen 9 a ist fest mit einem Abtriebshebel 9 b verbunden, der wiederum mit dem abtriebsseitigen Führungskoppeldrehgelenk 10 b verbunden ist.

Das Abtriebsglied 9 beschreibt eine Kreisschwenkbewegung um die raumfeste Achse 16.

Zur Funktionsfähigkeit der Einrichtung muss der Gelenkabstand der Kurbelverlängerung 4 c und auf dem Abtriebshebel 9 b gleich groß sein.

Es sei darauf verwiesen, dass alle rotatorischen Bewegungen in parallelen Ebenen stattfinden.

### 2. Ausführungsbeispiel:

Es wird auf die Figuren 5 und 6 verwiesen.

Es wird die prinzpielle Lösung gezeigt, wenn zwei Kurbeln 4 verwendet werden. Bewegungsablauf und Kraftfluss entsprechen dem 1. Ausführungsbeispiel.

### 3. Ausführungsbeispiel :

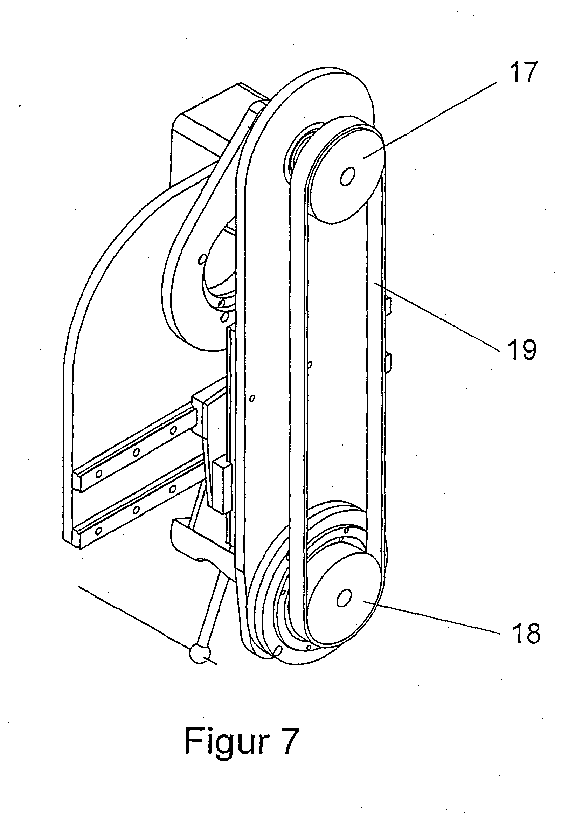

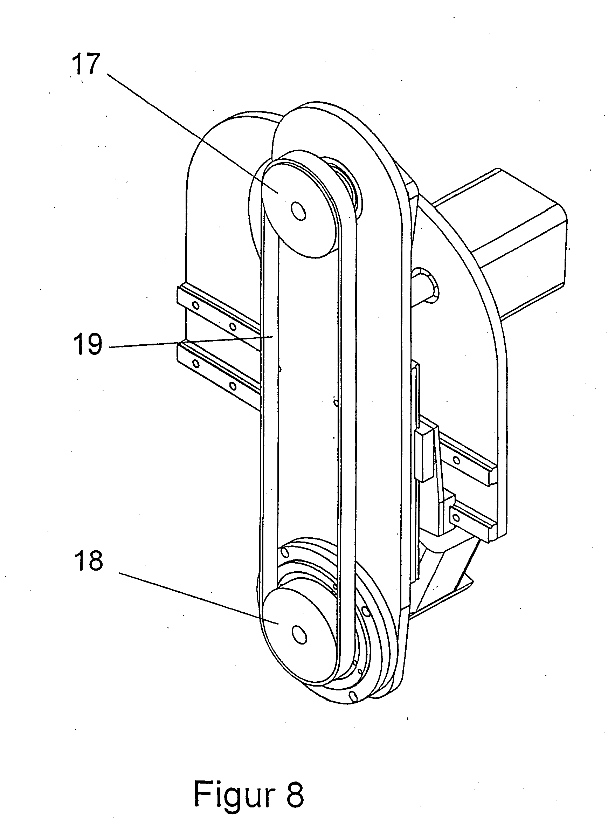

Es wird auf die Figuren 7 und 8 verwiesen.

Ausführungsbeispiel 3 zeigt eine prinzipielle Lösung unter Verwendung eines Zugmittelgetriebes, z.B. eines Zahnriemens oder einer Kette. Dazu ist im Unterschied zu Ausführungsbeispiel 1 auf dem Gelenkzapfen 4 b anstatt der Kurbelverlängerung 4 c das antriebsseitige Zugmittelgetrieberad 17 befestigt. Das abtriebsseitige Zugmittelgetrieberad 18 ist anstatt des Abtriebshebels 9 b auf dem abtriebsseitigen Tragekoppeldrehgelenk 5 b angebracht. Die Zugmittelgetrieberäder 17 und 18 besitzen identische Durchmesser. Beide Zugmittelgetrieberäder 17 und 18 sind über ein Zugmittel 19 verbunden.

### Aufstellung der verwendeten Bezugszeichen

- 1 -: Gestell
- 2 -: Werkzeug
- 3 -: Antrieb
- 3 a -: Antriebsritzel
- 4 -: Kurbel
- 4b-: Gelenkzapfen
- 4 c -: Kurbelverlängerung
- 5 -: Tragekoppel
- 5 a -: antriebsseitiges Tragekoppeldrehgelenk
- 5 b -: abtriebsseitiges Tragekoppeldrehgelenk
- 6 a -: gestellseitige Schiene
- 6 b -: erste Linearführung
- 7 -: erste Kreuzplatte
- 8 a -: tragekoppelseitige Schiene
- 8 b -: tragekoppelseitiger Wagen
- 9 -: Abtriebsglied
- 9 a -: Kragzapfen
- 9 b -: Abtriebshebel
- 10 -: Führungskoppel
- 10 a -: antriebsseitiges Führungskoppeldrehgelenk
- 10 b -: abtriebsseitiges Führungskoppeldrehgelenk
- 11 a -: tragekoppelseitige Schiene der 2. Linearführung
- 11 b -: tragekoppelseitiger Wagen der 2. Linearführung
- 12 -: zweite Kreuzplatte
- 14 a -: führungskoppelseitige Schiene der 2. Linearführung
- 14 b -: führungskoppelseitiger Wagen der 2. Linearführung
- 16 -: raumfeste Achse
- 17 -: antriebsseitiges Zugmittelgetrieberad
- 18 -: abtriebsseitiges Zugmittelgetrieberad
- 19 -: Zugmittel

## Patentansprüche

1. Vorrichtung zum Schwenken von Objekten unter Verwendung eines Gestells (1) und zwei Kreuzschiebeelementen sowie zwei Koppelgliedern, nämlich einer Tragekoppel (5) und einer Führungskoppel (10), welche mit Hilfe der Kreuzschiebeelemente zweidimensional verschiebbar sind und weiterhin einem Führungsglied, welches im kinematischen Sinn eine Kurbel (4) darstellt sowie einem Abtriebsglied (9) , an welchem das Objekt angeordnet ist, wobei
- die Kurbel (4) auf der einen Seite am Gestell (1) gelagert ist
- die Kurbel (4) auf der anderen Seite mit der Tragekoppel (5) drehgelenkig verbunden ist
- in axialer Richtung der drehgelenkigen Verbindung der Kurbel (4) mit der Tragekoppel (5) eine starre Kurbelverlängerung (4 c) angeordnet ist, welche mit einem antriebsseitigen Führungskoppeldrehgelenk (10 a) derart verbunden ist, dass die Kurbel (4) das antriebsseitige Tragekoppeldrehgelenk (5 a) und das antriebsseitige Führungskoppeldrehgelenk (10 a) entlang konzentrischer Kreisbahnen bewegt und weiterhin
- die Tragekoppel (5) und die Führungskoppel (10) jeweils im gleichen Abstand vom antriebsseitigen Tragekoppeldrehgelenk (5a) bzw. antriebsseitigen Führungskoppeldrehgelenk (10 a) ein abtriebsseitiges Tragekoppeldrehgelenk (5 b) bzw. abtriebsseitiges Führungskoppeldrehgelenk (10b) aufweisen
- das abtriebsseitige Tragekoppeldrehgelenk (5b) und das abtriebsseitige Führungskoppeldrehgelenk (10 b) untereinander mit dem Abtriebsglied (9), das den Werkzeughalter darstellt, drehbar verbunden sind, derart, dass der Werkzeughalter (9) sich auf der dem Gestell (1) zugewandten Seite der Tragekoppel (5) befindet und ein durch die Tragekoppel (5) hindurch führender Kragzapfen (9 a) fest mit einem Abtriebshebel (9 b) verbunden ist, welcher wiederum mit dem abtriebsseitigen Führungskoppeldrehgelenk (10 b) verbunden ist.

2. Vorrichtung nach Anspruch 1, **dadurch gekennzeichnet, dass** gestellseitig auf gleicher Höhe eine zweite Kurbel platziert ist, die sich synchron zur ersten Kurbel bewegt, wobei bedingt durch die zweite Kurbel die antriebsseitigen Bauteile, nämlich Gelenkzapfen (4 b), Kurbelverlängerung (4 c), antriebsseitiges Tragekoppeldrehgelenk (5a) und antriebsseitiges Führungskoppeldrehgelenk (10 a) zweifach ausgeführt sind.

3. Vorrichtung nach Anspruch 1, **dadurch gekennzeichnet, dass** die Vorrichtung nur aus einem Koppelglied besteht, das über ein Kreuzschiebeelement mit dem Gestell (1) verbunden ist, wobei unter Verwendung eines Drehgelenks dieses Koppelglied mit einem Hebel verbunden ist, der seinerseits wieder mit einem Drehgelenk eine Verbindung zum Gestell (1) besitzt und ein zweites Drehgelenk auf dem Koppelglied als Lagerung für das Abtriebsglied (9) dient.

4. Vorrichtung nach Anspruch 1 und 3, **dadurch gekennzeichnet, dass** das Koppelglied als Zugmittelgetriebe ausgebildet ist und damit eine Parallelführung des Abtriebsgliedes zur Antriebskoppel gegeben ist.

5. Vorrichtung nach Anspruch 1 und 2, **dadurch gekennzeichnet, dass** das Gestell (1) und die parallel zum Gestell geführten Koppelglieder (5, 10) vorzugsweise eben ausgeführt sind.

6. Vorrichtung nach Anspruch 1, 2 und 3, **dadurch gekennzeichnet, dass** die Kreuzschiebeelemente bevorzugt aus rechtwinklig zueinander angeordneten Linearführungen bestehen.

7. Vorrichtung nach Anspruch 1, 2 und 3, **dadurch gekennzeichnet, dass** der Antrieb der Vorrichtung bevorzugt über eine rotatorische Antriebsbewegung erfolgt.

## Claims

1. Device for swivelling objects by using a mounting (1) and two flexural slide elements, and two coupling members, namely a carrier coupler (5) and a guide coupler (10) the two of which can slide by means of the flexural slide elements within a plane, as well as a guide member which - in a kinematic sense - acts like a crank (4), and a driving member (9) to which the object is attached, in which
- a bearing to support the crank (4) is arranged on one side of the mounting (1);
- on the other side, the crank (4) is linked by a revolute joint with the carrier coupler (5);
- a rigid crank extension (4c), arranged in axial direction of the revolute joint linking the crank (4) with the carrier coupler (5), is connected to a guide-coupler revolute joint (10a) at the driving end in such a way as to cause the carrier-coupler revolute joint (5a) and the guide-coupler revolute joint (10a), both arranged at the driving end, to move in concentric circles when driven by the crank (4); and
- both carrier coupler (5) and guide coupler (10) have at their driven ends a carrier-coupler revolute joint (5b) and a guide-coupler revolute joint (10b) being equidistant from the carrier-coupler revolute joint (5a) and the guide-coupler revolute joint (10a) at their driving ends, respectively;
- the carrier-coupler revolute joint (5b) and the guide-coupler revolute joint (10b), both arranged at the driven end, are mutually connected by a revolute joint with the driven member (9) which forms the tool holder in a way where the tool holder (9) is situated on the carrier coupler's (5) side facing the mounting (1), and a corbelled peg (9a) protruding through the carrier coupler (5) is permanently fixed to a drive lever (9b) which in turn is connected to the guide-coupler revolute joint (10b) at the driven end.

2. Device according to claim 1 **characterized in that** a second crank, that moves synchronously to the first crank, is arranged at the same elevation on the mounting, which makes, due to the existence of that second crank, that the piece parts at the driving end, namely link pin (4b), crank extension (4c), carrier-coupler revolute joint (5a) and the guide-coupler revolute joint (10a at the driving end, are doubled.

3. Device according to claim 1 **characterized in that** the device comprises only one coupling member which is connected with the mounting (1) by a flexural slide element, and a revolute joint is used to connect this coupling member with a lever which in turn has one revolute joint to make a connection to the mounting (1), and a second revolute joint crank situated on the coupling member serves as bearing to support the driving member (9).

4. Device according to claims 1 and 3 **characterized in that** the coupling member is designed as a traction gear mechanism which guarantees parallel motion of driven member and driving coupler.

5. Device according to claims 1 and 2 **characterized in that** the mounting (1) and the coupling members (5, 10), which move parallel to the mounting, are preferably designed in a flat shape.

6. Device according to claims 1, 2 and 3 **characterized in that** the flexural slide elements are preferably composed of linear guides arranged in right angles to each other.

7. Device according to claims 1, 2 and 3 **characterized in that** the device is preferably driven through a rotator-type driving motion.

## Revendications

1. Dispositif servant à faire pivoter des objets en utilisant un bâti (1) et deux éléments de poussée croisés ainsi que deux bielles, notamment une bielle de transmission (5) et une bielle de guidage (10), lesquelles sont déplaçables sur deux dimensions à l'aide des éléments de poussée croisés et de plus un élément de guidage, lequel représente une manivelle (4) du point de vue de la cinématique et un élément d'entraînement (9) sur lequel est disposé l'objet en spécifiant que
- la manivelle (4) est logée sur un côté au bâti (1),
- que la manivelle (4) est reliée sur l'autre côté par une articulation tournante à la bielle de transmission (5),
- que dans le sens axial de la liaison à articulation tournante de la manivelle (4) avec la bielle de transmission (5) se trouve une prolongation rigide de la manivelle (4 c), laquelle est reliée avec une articulation tournante de la bielle de guidage (10 a) côté entraînement manière que la manivelle (4) mette en mouvement l'articulation tournante côté entraînement (5 a) et l'articulation tournante de la bielle de guidage (10 a) le long d'orbites circulaires concentriques et de plus que
- la bielle de transmission (5) et la bielle de guidage (10) présentent chacune à la même distance de l'articulation tournante de la bielle de transmission (5 a) côté entraînement et respectivement de l'articulation tournante de la bielle de guidage (10 a) côté entraînement une articulation tournante de la bielle de transmission (5 b) côté entraîné et respectivement une articulation tournante de la bielle de guidage (10 b) côté entraîné
- que l'articulation tournante de la bielle de transmission (5 b) côté entraîné et l'articulation tournante de la bielle de guidage (10 b) côté entraîné sont reliées ensemble de manière rotative avec l'élément entraîné (9), qui représente le porte-outil, de sorte que le porte-outil (9) se trouve sur le côté de la bielle de transmission (5) tourné vers le bâti (1) et qu'un maneton à console (9 a) passant à travers la bielle de transmission (5) soit relié fermement à un levier entraîné (9 b) lequel, quant à lui, est relié à l'articulation tournante de la bielle de guidage (10 b) côté entraîné.

2. Dispositif selon la revendication 1 **caractérisé en ce que** sur la même hauteur côté bâti se trouve une deuxième manivelle qui se déplace en synchronisme avec la première manivelle, les éléments côté entraînement en raison de la deuxième manivelle, notamment le pivot (4 b), le prolongement de la manivelle (4 c) l'articulation tournante de la bielle de transmission (5 a) côté entraînement et l'articulation tournante de la bielle de guidage (10 a) côté entraînement étant exécutés en double nombre.

3. Dispositif selon la revendication 1 **caractérisé en ce que** le dispositif n'est constitué que d'un élément de bielle relié au bâti (1) par un élément de poussée croisé, par l'utilisation d'une articulation tournante, cet élément de bielle étant relié à un levier, qui, de son côté, possède avec une articulation tournante une liaison au bâti (1) et une deuxième articulation tournante servant sur l'élément de bielle de logement pour l'élément entraîné (9).

4. Dispositif selon les revendications 1 et 3 **caractérisé en ce que** l'élément de bielle est formé comme engrenage de traction et qu'il y a ainsi un guidage parallèle de l'élément entraîné envers la bielle d'entraînement.

5. Dispositif selon les revendications 1 et 2 **caractérisé en ce que** le bâti (1) et les éléments de bielle (5, 10) menés parallèlement au bâti sont disposés de préférence de manière plane.

6. Dispositif selon les revendications 1, 2 et 3 **caractérisé en ce que** les éléments de poussée croisés sont constitués de guidages linéaires disposés perpendiculairement l'un par rapport à l'autre.

7. Dispositif selon les revendications 1, 2 et 3 **caractérisé en ce que** l'entraînement du dispositif se fait de préférence par un mouvement d'entraînement rotatoire.
